# EUROPÄISCHE PATENTSCHRIFT

(11) **EP 2 304 759 B1**
(45) Veröffentlichungstag und Bekanntmachung des Hinweises auf die Patenterteilung: **22.03.2017**
(21) Anmeldenummer: 09772094.0
(22) Anmeldetag: 19.06.2009
(51) Int. Cl.: H01H 71/02, H01H 71/74, H01H 9/22

(54) **ELEKTRISCHES SCHUTZSCHALTGERÄT MIT STEUERELEKTRONIK**
ELECTRIC PROTECTIVE SWITCH DEVICE HAVING CONTROL ELECTRONICS
DISJONCTEUR ELECTRIQUE AVEC ELECTRONIQUE DE COMMANDE

(30) Priorität: 02.07.2008 DE 102008031335
(43) Veröffentlichungstag der Anmeldung: 06.04.2011
(73) Patentinhaber: Eaton Electrical IP GmbH & Co. KG, 12529 Schönefeld (DE)
(72) Erfinder: DAUER, Klaus, 56075 Koblenz (DE); BAUJAN, Günter, 53844 Troisdorf (DE); JÜLICH, Anke, 53859 Niederkassel (DE)
(74) Vertreter: Eaton IP Group EMEA
(86) Internationale Anmeldenummer: PCT/EP2009/004428
(87) Internationale Veröffentlichungsnummer: WO 2010/000394

(56) Entgegenhaltungen:
- EP-A- 0 843 332
- DE-A1-102006 020 702
- DE-B3-102006 018 852

## Beschreibung

Die Erfindung betrifft ein elektrisches Schutzschaltgerät mit Steuerelektronik, insbesondere Motorstarter eines Elektromotors, Leitungsschutzschalter oder Schutzschalter gegen thermische Überlastung oder Kurzschluss, wobei die Steuerelektronik über ein Interface-Modul mit einem Bussystem vernetzbar ist und das Interface-Modul - mittels Kontakten - steckbar ist.

Bekannt sind elektrische Schutzschaltgeräte, insbesondere als Motorstarter oder Motorschutzschalter, deren Steuerelektronik über einen Kommunikationsbus anschließbar ist (beispielsweise DE 19820667 A1, DE 19924413 A1, DE 10010290 A1).

Andere Schutzschaltgeräte umfassen im wesentlichen eine Basisbaugruppe, eine manuelle Betätigungsvorrichtung, eine elektronische Steuereinheit, eine Aktoreinheit und einen Auslöser. Mit einer manuellen Betätigungsvorrichtung wird über einen Drehknopf und über eine Betätigungswelle mindestens der Schaltmechanismus betätigt, wobei die Betätigungsvorrichtung in einem zur Bedienfront auskragenden Gehäuseteil untergebracht ist, und die Betätigungswelle senkrecht zur Bedienfront angeordnet ist. Der Drehknopf ragt auf der Bedienfront vor und kann vorzugsweise auch abschliessbar gestaltet sein. Beispiele für nach dem Baukastenprinzip aufgebaute modulare Schutzschalter sind in der DE 3642719 A1 oder in der WO 01-27958 A1 beschrieben. Ein anderer Motorsschutzschalter kann auch mit auswechselbarem Überstrom-Auslöser-Modul ausgerüstet sein (CH-PS 319019).

In der DE 195 15 923 A1 ist ein Schutzschalter beschrieben, welcher modular erweitert werden kann durch das Anstecken von austauschbaren Zusatzmodulen. Der Schutzschalter hat ein zur Bedienfront hin hervorstehendes prismatisches Gehäuseteil, an dem senkrecht zur Bedienfront zwei Anschlussflächen und Kontaktflächen ausgebildet sind. Die Zusatzmodule können bei diesem Stand der Technik direkt an den Schutzschalter gesteckt werden oder sie werden getrennt vom Schutzschalter auf einer Unterlage (Tragschiene) befestigt.

Aus der EP 0843332 B1 ist ein Leistungsschalter mit einem abnehmbaren Kommunikationsmodul gemäß dem Oberbegriff des Hauptanspruchs bekannt.

Bei solchen und ähnlichen Schutzschaltern ist von Nachteil, dass der modulare Zusammenbau und das Trennen des Zusammenbaus unabhängig davon möglich ist, ob sich der Schutzschalter in der EINStellung befindet oder nicht.

Der Erfindung liegt die Aufgabe zugrunde, bei einem Schutzschaltgerät einen modularen Zusammenbau mit mindestens einem austauschbaren Kommunikationsmodul zu ermöglichen, bei der eine Sicherungsfunktion vorhanden ist, die vorzugsweise nur im Zustand AUS des Schutzschalters einen Austausch ermöglicht.

Die Lösung der Aufgabe findet sich im Kennzeichen des Hauptanspruchs. Weiterführende Ausgestaltungen sind in den Unteransprüchen formuliert.

Der Kern der Erfindung ist somit, dass die ersten mechanischen Führungselemente am Schaltgerät-Basismodul, zugeordnete mechanische Elemente am Steuermodul und zugeordnete mechanische Elemente am Kommunikationsmodul derart ausgebildet sind, dass eine elektrische Kontaktgabe zwischen Kommunikationsmodul und Steuermodul nur erfolgt, wenn in der Reihenfolge des Steckens zuerst das Kommunikationsmodul mit dem Schaltgerät-Basismodul mechanisch verbunden ist, und danach das Steuermodul auf Schaltgerät-Basismodul und Kommunikationsmodul aufgesteckt ist. Das steckbare Kommunikationsmodul ist als Interface zwischen der Steuerelektronik und einem elektronischen Bussystem ausgebildet.

Die Erfindung besteht aus einem als Baukastensystem ausgebildetem elektrischen Schutzschaltgerät mit einem abnehmbaren und mit einem Steuermodul zusammenwirkenden Kommunikationsmodul, welches jedoch in einem Ausführungsbeispiel nur abnehmbar ist, wenn das Schutzschaltgerät ausgeschaltet ist.

Die weiteren Merkmale und vorteilhaften Ausgestaltungen der Erfindung werden in Unteransprüchen formuliert, wobei die Merkmale einzeln oder in Kombination mit einander in einem erfindungsgemäßen Gegenstand verwirklicht sein können.

Es können verschiedene erste mechanische Führungselemente an den steckbaren Modulen ausgebildet sein. Beispielsweise können diese ersten mechanischen Führungselemente die Form von Nut und Feder haben, weiterhin sind Ausgestaltungen wie Leiste und Rille, oder zueinander korrespondierende Aussparungen einsetzbar. Insbesondere ist der Einbauraum im Schaltgerät-Basismodul mit zweiten mechanischen Führungselementen ausgestattet, die Teil eines Einführschachtes sein können. Weiterhin sind die Steckkontakte zwischen Steuermodul und Schaltgerät-Basismodul mechanisch präzise ausgebildet, so dass beim Finden der Stecköffnungen ebenfalls eine mechanische Führung und Halterung stattfindet.

Am Kommunikationsmodul kann ein Schnapphaken ausgebildet sein, der in der gesteckten Endstellung des Kommunikationsmoduls auf dem Schaltgerät-Basismodul in einen korrespondieren Haken eingreift und mit ihm eine lösbare Verrastung bildet. Der Schnapphaken kann als Filmscharnier am Kommunikationsmodul ausgebildet sein, und kann mit einem kleinen Werkzeug, möglicherweise auch manuell aus der Verrastung entriegelt werden, so dass das Kommunikationsmodul am Schaltgerät-Basismodul gesichert ist.

Am Schaltgerät-Basismodul kann eine Fangnase ausgebildet sein, die mit einer zugeordneten Gehäuseausbildung am Kommunikationsmodul korrespondiert. Dadurch wird die mechanische Stabilität zwischen Schaltgerät-Basismodul und Kommunikationsmodul nicht nur allein durch die Nut-und-Feder-Verbindung geschaffen, sondern mit diesen zusätzlichen mechanischen Elementen kommt eine verbesserte Halterung der beiden Teile zustande.

Die elektrische Leitung (Busleitung) zur Verbindung zwischen Kommunikationsmodul und dem Bussystem sollte am Kommunikationsmodul unlösbar kontaktiert sein.

Das Kommunikationsmodul kann selbst noch einen Elektronikbaustein umfassen, der als austauschbarer Elektronik-Chip ausgebildet ist, und beispielsweise zur Adressspeicherung dient.

Die elektrischen Kontaktmittel zwischen Kommunikationsmodul und Steuermodul können handelsübliche Stecksysteme sein, beipielsweise RJ45-Stecksysteme.

Bei Arbeiten an einer mit dem Gerät geschützten elektrischen Anlage oder an einem zu schützenden Elektromotor sollte die Baugruppe trennbar sein, insbesondere durch Ziehen des Steuermoduls. Dadurch wird die Anlage oder der Elektromotor spannungsfrei und eine sichtbare Trennstelle entsteht und der Leitungszug sicher unterbrochen ist.

Hierbei ist es wesentlich, dass die Öffnungen für die Steckkontakte im Schaltgerät-Basismodul fingersicher ausgeführt und damit gegen unbeabsichtigtes Berühren gesichert sind.

Vorzugsweise kann bei einer Ausführungsform des Schutzschaltgeräts eine Vorrichtung zur Plombierung eines der auf das Schaltgerät-Basismodul steckbaren Module vorhanden sein. Durch eine Plombierung des Steuermoduls mit dem Schaltgerät-Basismodul ist indirekt auch die Entnahme des Kommunikationsmoduls unterbunden.

Mit der beim erfindungsgemäßen Schutzschaltgerät eingesetzten Steuerelektronik ergibt sich der Vorteil eines Grundgeräts, bei dem auf einfache und sichere Weise Funktionen für den Einsatz eingestellt oder, falls erforderlich, in seinen Werten verändert werden können. Der Steuerelektronik kann eine Spannungsversorgung aus der Hauptstrombahn des Schutzschalters zugeführt werden, so dass die Steuerelektronik immer aktiv ist, wenn das Schutzschaltgerät und der oder die hinterliegenden Verbraucher Strom führen. Die Steuerelektronik ist auf bestimmte Steuergrößen für einen Fehlerfall, in denen das Schutzschaltgerät abzuschalten hat, einstellbar. Die Einstellungen können vorzugsweise auch von einer Bedienperson auf unterschiedliche Steuergrößen an von außen zugänglichen Drehknöpfen verändert werden. Als Steuergrößen sind vorrangig die Trägheit der Abschaltung und ein einen bestimmten Nennstrom übersteigender Fehlerstrom vorgegeben und/oder einstellbar. Solche Fehlerstromkriterien sind auch von internationalen Normen (EN 60947) erfasst, wo beispielsweise Auslösezeiten verschiedenen Gruppen von Nennströmen zugeordneten sind.

Die Aktoreinheit einschließlich Auslöser (Auslöserblock) kann Bestandteil des elektronischen Steuermoduls sein. Steuermodul und Auslöserblock bilden somit gemeinsam ein steckbares Modul. Das Zusammenfassen beider ist von Vorteil, weil ein Auslöserblock von sich aus so gestaltet ist, dass er Steuerfunktionen umfasst und so die Kommunikationsfunktion mit der Schaltersteuerung in einer Baueinheit zusammen geführt sind.

Bei Auftreten des Fehlers steuert die Steuerelektronik der Aktoreinheit, bzw. des Auslöserblocks den Schaltmechanismus an, wodurch es zum Öffnen der Kontakte der Hauptstrombahnen kommt. Der Kern der Aktoreinheit ist ein Kraftspeicher im Schaltgerät-Basismodul, welcher die beschleunigte Beaufschlagung des Schaltschlosses bewirkt. Zum Schutzschaltgerät gehört ein Kurzschluss-Schnellauslöser, der über eine mechanische Wirkverbindung ebenfalls auf den Schaltapparat einwirkt.

Das Schutzschaltgerät mit der beschriebenen Basisbaugruppe bildet ein Grundgerät, bei dem der Kunde/Bediener durch Auswechseln der Steuerelektronik, bzw. des in dem Auslöserblock integrierten Steuermoduls individuelle Funktionsmerkmale vorbestimmen und/oder ändern kann. Es können auch weitere Einzelkomponenten in oder auf das Schaltgerät-Basismodul steckbar sein, oder auf andere Weise mit dem Schutzschaltgerät zusammengebaut sein.

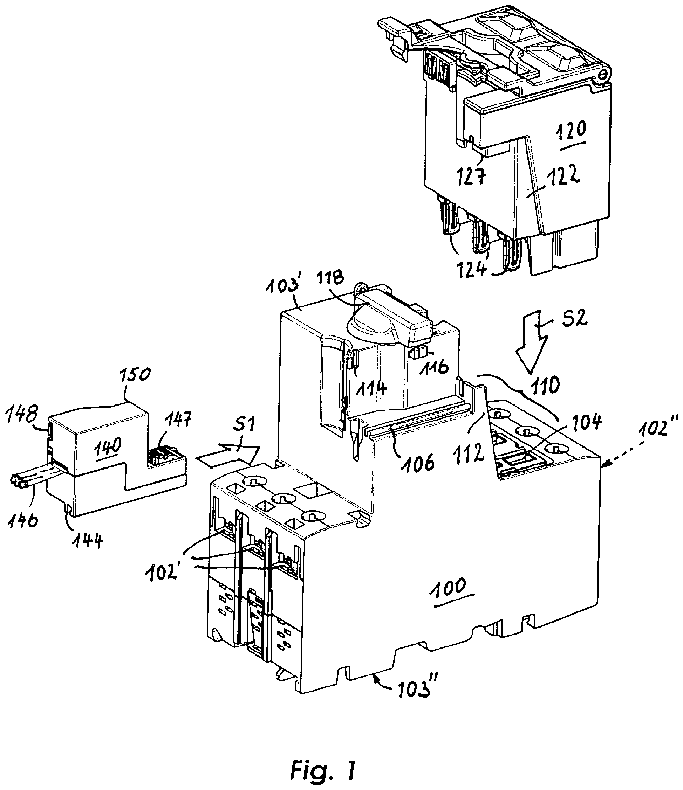

Die Erfindung wird in einer einzigen Zeichnung dargestellt, die ein besonderes Ausführungsbeispiel darstellt.

Die Figur zeigt eine perspektivische Darstellung der drei Elemente des Baukastensystems. Die Erfindung bezieht sich auf ein Schutzschaltgerät, das Bestandteil einer zusammensteckbaren Schalterkombination ist, deren Komponenten nach dem Baukastensystem ausgebildet sind. Die Bestandteile des Baukastens sind - soweit dies für die vorliegende Anmeldung relevant ist: ein Schaltgerät-Basismodul 100, ein Steuermodul 120 und ein Kommunikationsmodul 140. Zum Stecken der Teile des Baukastensystems sind mechanische Führungselemente und elektrische Kontaktmittel (Steckkontakte, Kontaktbuchsen) vorhanden.

Die Unterseite 103" des Schaltgerät-Basismoduls 100 dient vornehmlich zur Befestigung auf einer Unterlage, beispielsweise auf einer Tragschiene, wohingegen seine Oberseite 103' als Bedienfront für den Bediener ausgebildet ist, insbesondere mit einem Betätigungsdrehknopf und mit Anzeigemitteln ausgestattet ist.

Das Schaltgerät-Basismodul 100 umfasst zwischen den Eingangs- und Ausgangskontakten (102', 102") verlaufende mehrphasige Hauptstrombahnen, im wesentlichen einen (nicht weiter dargestellten) Kontaktapparat, ein (nicht weiter dargestelltes) Schaltschloss und eine manuelle Betätigungseinrichtung 118 für das Schutzschaltgerät. Zum Schaltgerät-Basismodul 100 gehört weiterhin eine Aktoreinheit als Spann- und Betätigungseinheit für die Schaltschlossmechanik.

Wie erwähnt gibt es Schutzschalter, bei denen ein Auslöserblock in einem Basismodul vorhanden ist, oder bei dem ein Auslöserblock steckbar (entnehmbar) auf einem Basismodul angeordnet ist. In modernen Schutzschaltern umfasst der Auslöserblock eine elektronische Steuerelektronik. Die Steuerelektronik ist das Zentrum der Steuereinheit. Der Steuerelektronik werden Eingangs- und Mess-Signale über Stromwandler als Parameter oder Erfassungsdaten des durch die Hauptstrombahnen fließenden Stroms zugeführt. Die Steuereinheit ist auf bestimmte Steuergrößen für den Fehlerfall, in denen das Schutzschaltgerät abzuschalten ist, eingestellt.

An dem Schaltgerät-Basismodul 100 ist durch eine Gehäuseaussparung ein prismatischer Einbauraum 110 ausgebildet, in den das Steuermodul einschiebbar und elektrisch mit dem Schaltgerät-Basismodul 100 verbindbar ist. Die elektrischen Kontaktmittel bestehen aus Steckfingern 124 am Steuermodul und aus Steckbuchsen 104 am Schaltgerät-Basismodul. Als Teile eines Einführschachts können Gehäusewandteile 112 am Schaltergehäuse ausgebildet sein, so dass hier zusätzliche mechanische Führungselemente für das sichere Einstecken des Steuermoduls vorhanden sind. Die Einschieberichtung ist in der Figur durch den Pfeil S2 angedeutet, und verläuft senkrecht zur Oberfläche 103' des Schaltgerät-Basismoduls 100. Der Kern der Erfindung besteht darin, dass das Kommunikationsmodul nicht aus dem Zusammenbau herauslösbar ist, solange sich das Steuermodul in seiner gesteckten Position befindet. Hiermit ist sichergestellt, dass die Kommunikation zwischen der Steuerelektronik und dem elektronischen Bussystem nur unterbrechbar ist, wenn das Steuermodul aus dem Schaltgerät-Basismodul 100 entfernt ist. Dies soll gemäß Erfindung nur möglich sein, wenn das Schutzschaltgerät sich in AUSgeschalteter Funktion befindet.

### Bezugszeichen

- 100: Schaltgerät-Basismodul
- 102' 102": Kontakte Hauptstrombahn
- 103' 103": Oberseite, Unterseite
- 104: Kontakte zum Steuermodul
- 106: erste mechan. Führungselemente (Nut)
- 110: Einbauraum
- 112: zweite mechan. Führungselemente (Einführschacht, Führung)
- 114: Haken
- 116: Fangnase
- 118: Betätigungsdrehknopf
- 120: Steuermodul; integr. in Auslöseblock
- 122: Führung
- 124: Kontakte zum Schaltgerät-Basismodul, Steckfinger
- 127: Stecker (Kontakte)
- 140: Kommunikationsmodul
- 146: Busleitung
- 144: Feder (zur Nut)
- 147: Steckbuchse (Kontakte)
- 148: Filmscharnier, Schnapphaken
- 150: Haken
- S1: Stecken Kommunikationsmodul auf Basismodul
- S2: Stecken Steuermodul auf Basismodul

## Patentansprüche

1. Als Baukastensystem ausgebildetes, elektrisches Schutzschaltgerät, insbesondere Motorstarter eines Elektromotors oder Schütz, umfassend- ein Schaltgerät-Basismodul (100),
- ein eine Steuerelektronik umfassendes Steuermodul (120),
- und ein Kommunikationsmodul (140), welches als Interface zwischen der Steuerelektronik und einem elektronischen Bussystem ausgebildet ist,
wobei Steuermodul (120) und Kommunikationsmodul (140) mechanisch und elektrisch mit dem Schaltgerät-Basismodul (100) verbindbar sind,
wobei an dem Schaltgerät-Basismodul (100) erste mechanische Führungselemente (106) ausgebildet sind, in denen das Kommunikationsmodul (140) über korrespondierende mechanische Elemente (144) einschiebbar ist,
und im Schaltgerät-Basismodul (100) ein Einbauraum (1 10) mit elektrischen Kontaktmitteln (104) ausgebildet ist, in die das Steuermodul (120) einbaubar ist,
und am Steuermodul (120) elektrische Gegenkontaktmittel (124) zur Kontaktierung mit dem Schaltgerät-Basismodul (100) und elektrische Gegenkontaktmittel (127) zur Kontaktierung mit dem Kommunikationsmodul (140) ausgebildet sind,
**dadurch gekennzeichnet, dass** die ersten mechanischen Führungselemente (106) am Schaltgerät- Basismodul (100), zugeordnete mechanische Elemente (122) am Steuermodul (120) und die zugeordneten mechanischen Elemente (144) am Kommunikationsmodul (140) derart ausgebildet sind, dass eine elektrische Kontaktgabe zwischen Kommunikationsmodul (140) und Steuermodul (120) nur erfolgt, wenn in der Reihenfolge des Steckens zuerst das Kommunikationsmodul (140) mit dem Schaltgerät-Basismodul (100) mechanisch verbunden ist, und danach das Steuermodul (120) auf Schaltgerät-Basismodul (100) und Kommunikationsmodul (140) aufgesteckt ist.

2. Elektrisches Schutzschaltgerät nach Anspruch 1, **dadurch gekennzeichnet, dass** der für das Steuermodul (120) bestimmte Einbauraum (110) im Schaltgerät-Basismodul (100) mit zweiten mechanischen Führungselementen (112) ausgestattet ist.

3. Elektrisches Schutzschaltgerät nach Anspruch 1 oder 2, **dadurch gekennzeichnet, dass** die mechanischen Führungselemente (106) und ihre zugeordneten mechanischen Elemente (144) an den steckbaren Modulen (100, 120, 140) in Form von Nut und Feder (106, 144) ausgebildet sind.

4. Elektrisches Schutzschaltgerät nach einem der vorhergehenden Ansprüche, **dadurch gekennzeichnet, dass** das Steuermodul (120) gemeinsam mit einem Auslöseblock des Schutzschaltgeräts ein steckbares Modul bildet.

5. Elektrisches Schutzschaltgerät nach einem der vorhergehenden Ansprüche, **dadurch gekennzeichnet, dass** am Kommunikationsmodul (140) ein Schnapphaken (148) ausgebildet ist, der in der gesteckten Endstellung des Kommunikationsmoduls (140) auf dem Schaltgerät-Basismodul (100) in einen korrespondieren Haken (114) eingreift und mit ihm eine lösbare Verrastung bildet.

6. Elektrisches Schutzschaltgerät nach Anspruch 5, **dadurch gekennzeichnet, dass** der Schnapphaken (148) als Filmscharnier am Kommunikationsmodul (140) ausgebildet ist.

7. Elektrisches Schutzschaltgerät nach einem der vorhergehenden Ansprüche, **dadurch gekennzeichnet, dass** am Schaltgerät-Basismodul eine Fangnase (116) ausgebildet ist, die mit einer zugeordneten Gehäuseausbildung (150) am Kommunikationsmodul (140) korrespondiert.

8. Elektrisches Schutzschaltgerät nach einem der vorhergehenden Ansprüche, **dadurch gekennzeichnet, dass** eine elektrische Leitung (146) zur Verbindung zwischen Kommunikationsmodul (140) und dem Bussystem am Kommunikationsmodul (140) unlösbar kontaktiert ist.

9. Elektrisches Schutzschaltgerät nach einem der vorhergehenden Ansprüche, **dadurch gekennzeichnet, dass** das Kommunikationsmodul (140) einen Elektronikbaustein umfasst.

10. Elektrisches Schutzschaltgerät nach einem der vorhergehenden Ansprüche, **dadurch gekennzeichnet, dass** elektrische Kontaktmittel (127, 147) zwischen Kommunikationsmodul (140) und Steuermodul (120) als RJ45-Stecksystem ausgebildet sind.

11. Elektrisches Schutzschaltgerät nach einem der vorhergehenden Ansprüche, **dadurch gekennzeichnet, dass** an den steckbaren Modulen (120, 140) des Schutzschaltgeräts eine Vorrichtung zur Plombierung eines auf das Schaltgerät-Basismodul gesteckten Moduls vorhanden ist.

## Claims

1. Electric protective switching device configured as a modular system, in particular motor starter of an electric motor or electric contactor, comprising a switching device base module (100),
- a control module including control electronics (120),
- and a communication module (140), which is configured as an interface between the control electronics and an electronic bus system,
wherein the control module (120) and the communication module (140) are connectable mechanically and electrically to the switching device base module (100),
wherein first mechanical guide elements (106) are configured on the switching device base module (100), into which the communication module (140) can be slid by means of corresponding mechanical elements (144),
and an installation space (110) with electric contacts (104) is configured in the switching device base module (100) in which the control module (120) can be installed,
and electric counter contacts (124) on the control module (120) are configured for contacting with the switching device base module (100) and electric counter contacts (127) for contacting with the communication module (140),
**characterised in that** the first mechanical guide elements (106) on the switching device base module (100), associated mechanical elements (122) on the control module (120) and the associated mechanical elements (144) on the communication module (140) are configured in such a way that an electric contacting between the communication module (140) and the control module (120) is only established when, in the plugging sequence, the communication module (140) is first mechanically connected to the switching device base module (100), and then the control module (120) is plugged onto the switching device base module (100) and onto the communication module (140).

2. Electric protective switching device according to Claim 1, **characterised in that** the installation space (110) in the switching device base module (100) designated for the control module (120) is equipped with second mechanical guide elements (112).

3. Electric protective switching device according to Claim 1 or 2, **characterised in that** the mechanical guide elements (106) and associated mechanical elements (144) thereof are configured on the pluggable modules (100, 120, 140) in the form of tongue and groove (106,144).

4. Electric protective switching device according to any one of the preceding claims, **characterised in that** the control module (120) and a trigger block of the protective switching device together form a pluggable module.

5. Electric protective switching device according to any one of the preceding claims, **characterised in that** a snap-type hook (148) is configured on the communication module (140), which in the plugged final position of the communication module (140) on the switching device base module (100), engages into a corresponding hook (114) and establishes a detachable connection with it.

6. Electric protective switching device according to Claim 5, **characterised in that** the snap-type hook (148) is configured as a film hinge on the communication module (140).

7. Electric protective switching device according to any one of the preceding claims, **characterised in that** a catching tab (116) is configured on the switching device base module that corresponds to an associated housing formation (150) on the communication module (140).

8. Electric protective switching device according to any one of the preceding claims, **characterised in that** an electric line (146) is undetachably contacted to the communication module (140) for connecting the communication module (140) and the bus system.

9. Electric protective switching device according to any one of the preceding claims, **characterised in that** the communication module (140) comprises an electronic chip.

10. Electric protective switching device according to any one of the preceding claims, **characterised in that** electric contact means (127, 147) between the communication module (140) and the control module (120) are configured as an RJ45 plug system.

11. Electric protective switching device according to any one of the preceding claims, **characterised in that** an apparatus is present on the pluggable modules (120, 140) of the protective switching device for applying a lead seal onto one of the modules plugged onto the switching device base module.

## Revendications

1. Disjoncteur électrique, conçu comme un système modulaire, notamment démarreur d'un moteur électrique ou contacteur, comprenant
- un module de base commutateur (100),
- un module de commande (120) comprenant une électronique de commande,
- et un module de communication (140) qui est conçu comme une interface entre l'électronique de commande et un système de bus électronique,
le module de commande (120) et le module de communication (140) pouvant être reliés mécaniquement et électriquement au module de base commutateur (100),
des premiers éléments de guidage mécaniques (106), dans lesquels le module de communication (140) peut être poussé par l'intermédiaire d'éléments mécaniques (144) correspondants, étant conçus sur le module de base commutateur (100),
un espace d'insertion (110) avec des moyens de contact électriques (104), dans lequel le module de commande (120) peut être inséré, étant conçu dans le module de base commutateur (100),
et des moyens de contact complémentaires (124) électriques destinés à la mise en contact avec le module de base commutateur (100) et des moyens de contact complémentaires (127) électriques destinés à la mise en contact avec le module de communication (140) étant conçus sur le module de commande (120),
**caractérisé en ce que** les premiers éléments de guidage mécaniques (106) sur le module de base commutateur (100), des éléments mécaniques associés (122) sur le module de commande (120) et les éléments mécaniques associés (144) sur le module de communication (140) sont conçus de telle sorte qu'un contact électrique entre le module de communication (140) et le module de commande (120) ne s'effectue que lorsque, dans l'ordre de la connexion, le module de communication (140) est d'abord relié mécaniquement au module de base commutateur (100) et le module de commande (120) est ensuite enfiché sur le module de base commutateur (100) et sur le module de communication (140).

2. Disjoncteur électrique selon la revendication 1, **caractérisé en ce que** l'espace d'insertion (110) destiné au module de commande (120) dans le module de base commutateur (100) est équipé de deuxièmes éléments de guidage mécaniques (112).

3. Disjoncteur électrique selon la revendication 1 ou 2, **caractérisé en ce que** les éléments de guidage mécaniques (106) et leurs éléments mécaniques associés (144) sont conçus sur les modules enfichables (100, 120, 140) sous la forme de rainures et languettes (106, 144).

4. Disjoncteur électrique selon l'une des revendications précédentes, **caractérisé en ce que** le module de commande (120) forme, conjointement avec un bloc de déclenchement du disjoncteur, un module enfichable.

5. Disjoncteur électrique selon l'une des revendications précédentes, **caractérisé en ce qu'**un crochet à encliqueter (148) est conçu sur le module de communication (140), lequel crochet à encliqueter pénètre, dans la position finale enfichée du module de communication (140) sur le module de base commutateur (100), dans un crochet correspondant (114) et forme avec celui-ci un enclenchement amovible.

6. Disjoncteur électrique selon la revendication 5, **caractérisé en ce que** le crochet à encliqueter (148) est conçu comme une charnière à film sur le module de communication (140).

7. Disjoncteur électrique selon l'une des revendications précédentes, **caractérisé en ce qu'**un taquet d'arrêt (116) est conçu sur le module de base commutateur, lequel taquet d'arrêt correspond à un logement associé (150) sur le module de communication (140).

8. Disjoncteur électrique selon l'une des revendications précédentes, **caractérisé en ce qu'**une ligne électrique (146) est mise en contact de manière inamovible sur le module de communication (140) pour la liaison entre le module de communication (140) et le système de bus.

9. Disjoncteur électrique selon l'une des revendications précédentes, **caractérisé en ce que** le module de communication (140) est un composant électronique.

10. Disjoncteur électrique selon l'une des revendications précédentes, **caractérisé en ce que** des moyens de contact électriques (127, 147) entre le module de communication (140) et le module de commande (120) sont conçus sous forme de système de connexion RJ45.

11. Disjoncteur électrique selon l'une des revendications précédentes, **caractérisé en ce qu'**un dispositif pour plomber un module enfiché sur le module de base commutateur est prévu sur les modules enfichables (120, 140) du disjoncteur électrique.
